(19) Europäisches Patentamt

European Patent Office

Office européen des brevets

(11) EP 1 195 881 A2

(12) **EUROPÄISCHE PATENTANMELDUNG**

(43) Veröffentlichungstag:
**10.04.2002 Patentblatt 2002/15**

(51) Int Cl.$^7$: **H02M 1/14**

(21) Anmeldenummer: **01122337.7**

(22) Anmeldetag: **19.09.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **28.09.2000 DE 10048094**

(71) Anmelder: **ABB PATENT GmbH**
**68526 Ladenburg (DE)**

(72) Erfinder: **Gräfe, Martin Ernst Dr.-Ing.**
**58513 Lüdenscheid (DE)**

(74) Vertreter: **Miller, Toivo et al**
**ABB Patent GmbH**
**Postfach 1140**
**68520 Ladenburg (DE)**

(54) **Schaltnetzteil mit einer Einrichtung zur Funkstörspannungskompensation**

(57)     Die Erfindung bezieht sich auf ein Schaltnetzteil mit einem Transformator (TR) zur Kopplung eines Primärteils mit einem Sekundärteil, wobei der Primärteil dafür eingerichtet ist, eine hochfrequente Spannung zu erzeugen, und der Sekundärteil dafür eingerichtet ist, eine Ausgangs-Gleichspannung zu erzeugen, und wobei eine Einrichtung zur Kompensation einer hochfrequenten Störspannung ($U_{stör}$) vorhanden ist, die aufgrund einer zwischen Wicklungen (W1, W2) des Transformators (TR) bestehenden parasitären Kapazität ($C_{par}$) im Schaltnetzteilbetrieb übertragen wird. Dabei ist eine Reihenschaltung eines Funkentstörkondensators (C2) und einer Hilfsspannungsquelle. ($Q_{Hi}$) angeordnet, wobei die Hilfsspannungsquelle ($Q_{Hi}$) dafür eingerichtet ist, eine Kompensationsspannung ($U_{comp}$) zur Kompensation der Störspannung ($U_{stör}$) zu bilden. Diese Reihenschaltung (C2, $Q_{Hi}$) ist als Verbindung eines Leiters (N) des Primärteils mit einem Leiter (0 V oder +U) des Sekundärteils angeordnet.

Fig. 1

EP 1 195 881 A2

**Beschreibung**

Die Erfindung bezieht sich auf ein Schaltnetzteil mit einer Einrichtung zur Dämpfung hochfrequenter Störspannungen.

Das Schaltnetzteil (Switched Mode Power Supply - SMPS) ist geeignet für den Einsatz in netzbetriebenen elektronischen Geräten, insbesondere für Geräte, die eine Stromversorgung kleiner Leistung (typisch < 50 W) und mit einer ausgangsseitigen Sicherheitskleinspannung (SELV) erfordern.

Anforderungen an Geräte mit ausgangsseitiger Sicherheitskleinspannung sind in Normen festgelegt. So ist z.B. in VDE 0565, Abschnitt 1.5.4 ausgeführt, daß "Kondensatoren oder RC-Kombinationen der Klasse Y für Anwendungen geeignet sind, bei denen der Ausfall des Kondensators zu einem gefährdenden elektrischen Schlag führen könnte." Bei Schaltnetzteilen mit Anordnung eines Funkentstörkondensators zwischen Primär- und Sekundärseite ist eine solche Situation gegeben, da bei Ausfall (Durchbruch) des Kondensators die Ausgangsseite auf Netzspannungspotential (230V) liegen könnte; diese ist jedoch als SELV ausgezeichnet, muß also gefahrlos berührbar sein. Da Geräte, die SELV-Ausgang und Netzanschluß aufweisen, mit 3750 V Prüfspannung zwischen SELV-Ausgang und Netz getestet werden müssen, sind nur entweder ein Y1-Kondensator (4kV-fest) oder zwei Y2-Kondensatoren in Reihe (je 2kV) einsetzbar. Die Zulässigkeit der Reihenschaltung ist in VDE 0712 Teil 24 (Apr. '95) geregelt (§ 11.3). Durch die hohen Anforderungen an Y-Kondensatoren bedingt, sind diese groß und teuer, weshalb Schaltungen zu bevorzugen sind, die möglichst wenige Y-Kondensatoren erfordern.

In EN 55014 (el. Geräte allg.), EN 55015 (Leuchtmittel und Zubehör), EN 55022 Abschnitt 5.1.3 "Tastkopf" wird die Messung mit einem Tastkopf an allen Anschlüssen, die nicht Netzanschlüssen sind, vorgeschrieben.

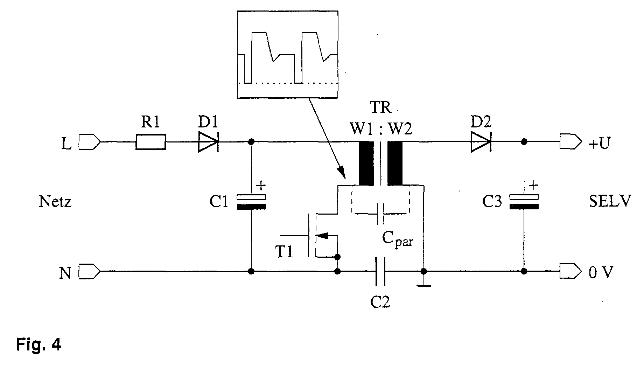

Eine gemäß dem Stand der Technik übliche Schaltung eines Schaltnetzteils mit einer ausgangsseitigen Sicherheitskleinspannung ist in Fig. 4 angegeben. Diese enthält einen als Hochfrequenz-Transformator ausgeführten Transformator TR mit einer Primärwicklung W1 und einer Sekundärwicklung W2. Ein solcher, auch als elektronischer Transformator bezeichneter Transformator TR weist eine parasitäre Kapazität $C_{par}$ zwischen den Wicklungen W1, W2 auf.

Primärseitig sind ein Reihenwiderstand R1, eine erste Gleichrichterdiode D1 und ein erster Glättungskondensator zur Gleichrichtung einer Netzwechselspannung L, N, und ein elektronischer Schalter T1 zum Schalten des durch die Primärwicklung W1 fließenden Stromes mit einer Schaltfrequenz von typisch 60 kHz bis 120 kHz angeordnet.

Sekundärseitig sind zur Gleichrichtung - hier in einer Sperrwandlerschaltung - eine zweite Gleichrichterdiode D2 und ein zweiter Glättungskondensator C3 angeordnet, womit eine Ausgangsgleichspannung +U gebildet wird.

Die parasitäre Kapazität $C_{par}$ in der Größenordnung von $10^{-12}$ F zwischen den Wicklungen W1, W2 des Transformators TR bewirkt, daß hochfrequente Schaltsignale von der Primärseite, also der Netzseite, auf die Sekundärseite gelangen. Dadurch sind alle sekundärseitigen Potentiale - bezogen auf den im allgemeinen mit Schutzerde gekoppelten Nulleiter N mit einer hochfrequenten Störung überlagert. Zur Dämpfung dieser Störung ist zwischen den Nulleiter N der Primärseite und die sekundärseitige Masse (0 V) ein Funkentstörkondensator C2 geschaltet. Entsprechend den vorgenannten Sicherheits-Vorschriften muß dieser Kondensator C2 mittels eines Y1-Kondensators oder zwei in Reihe geschalteten Y2-Kondensatoren realisiert sein.

Durch die auf wenige Nanofarad begrenzte Kapazität des Kondensators C2 läßt sich das Störsignal jedoch im allgemeinen nur auf einige 100 mV reduzieren, was bei einer Geräteausführung mit herausgeführten Klemmen an der Ausgangsspannungsseite aber nicht zur Einhaltung der Funkstörspannungswerte nach EN 60669 ausreichend ist.

Der Erfindung liegt daher die Aufgabe zugrunde, ein Schaltnetzteil mit verbesserter Dämpfung von Störspannungen anzugeben.

Diese Aufgabe wird durch ein Schaltnetzteil gelöst, das die im Anspruch 1 angegebenen Merkmale aufweist. Vorteilhafte Ausgestaltungen sind in weiteren Ansprüchen angegeben.

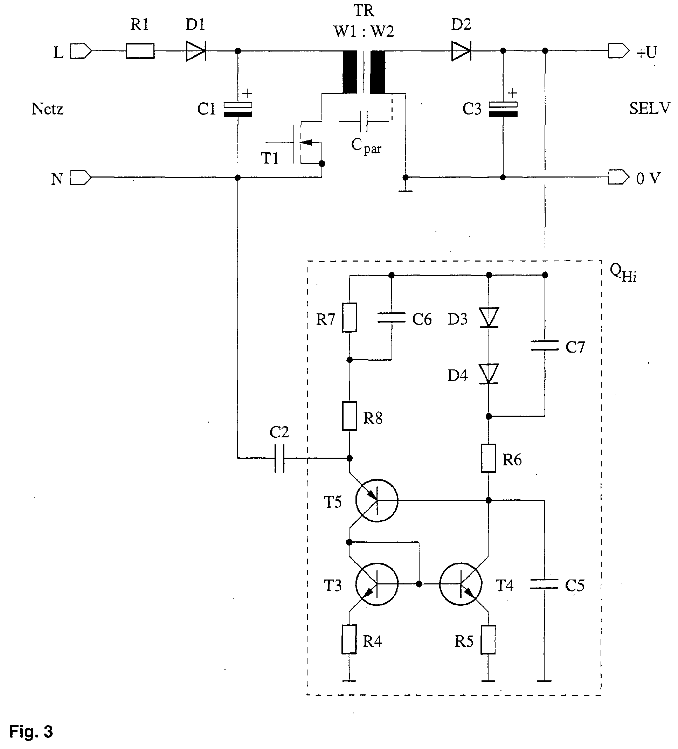

Beim erfindungsgemäßen Schaltnetzteil ist demnach der Funkentstörkondensator sekundärseitig nicht - wie im Stand der Technik üblich - direkt mit der Ausgangsspannung (in der Regel mit Masse) verbunden, sondern mit einer HF-Hilfsspannungsquelle verbunden, die den durch die parasitäre Kapazität übertragenen Störpegel kompensiert. Mit einer bevorzugten, in Fig. 3 dargestellten Schaltungsvariante wird erreicht, daß in der Schaltung nur ein Exemplar des aufwendigen Y1-Funkstörspannungskondensator erforderlich ist.

Eine weitere Beschreibung der Erfindung und ihrer Vorteile erfolgt nachstehend anhand von Ausführungsbeispielen, die in Zeichnungsfiguren dargestellt sind.

Es zeigt:

Fig. 1    die Prinzipschaltung eines Schaltnetzteils mit erfindungsgemäßer Funkstörspannungskompensation,

Fig. 2    eine erste Schaltungsvariante zur Realisierung des Schaltnetzteils,

Fig. 3    eine zweite Schaltungsvariante zur Realisierung des Schaltnetzteils, und

Fig. 4    eine Prinzipschaltung eines Schaltnetzteils nach dem Stand der Technik.

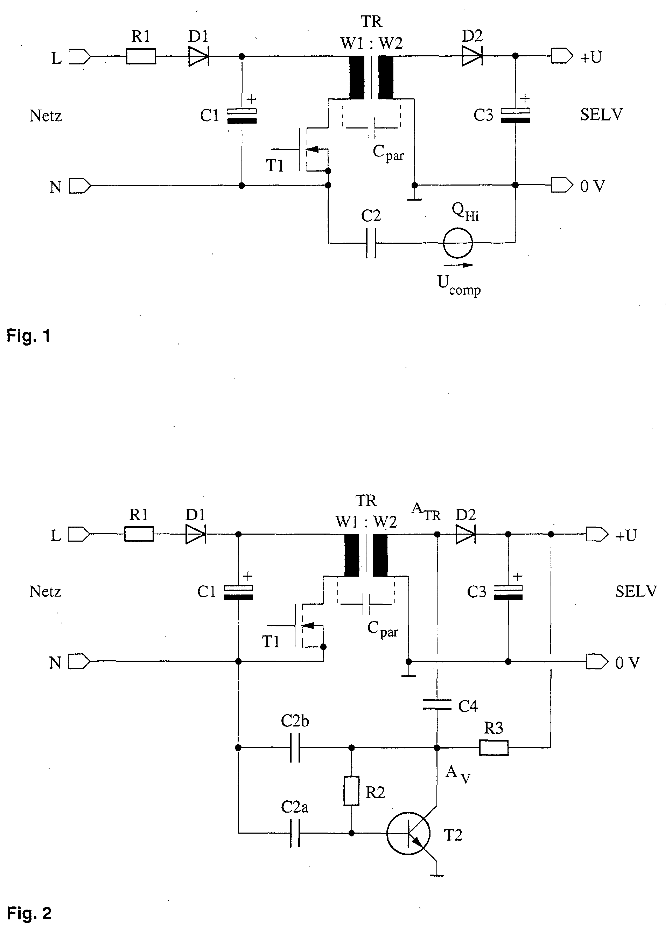

In den in Fig. 1 bis Fig. 4 dargestellten Schaltungen sind jeweils bezüglich Ihrer Funktion übereinstimmende Komponenten mit denselben Bezugszeichen versehen.

Fig. 1 zeigt in einer Darstellung des Schaltungsprinzips, daß der Funkentstörkondensator C2 in einer ansonsten mit Fig. 4 übereinstimmenden Schaltung sekundärseitig nicht mit der Ausgangsspannung, sondern mit einer HF-Hilfsspannungsquelle $Q_{Hi}$, die die durch die parasitäre Kapazität $C_{par}$ übertragene Störspannung $U_{stör}$ kompensiert, verbunden ist. Dazu muß die von der Hilfsspannungsquelle $Q_{Hi}$ erzeugte Kompensationsspannung $U_{comp}$ identisch mit dem Störsignal $U_{stör}$ sein, das sich zwischen der Masse (0 V) und dem Nulleiter N einstellt. Die Kompensationsspannung kann z.B. durch einen (nicht in Zeichnungsfiguren dargestellten) passiven Spannungsteiler von der sekundärseitigen Transformatoren-Wicklung erzeugt werden, wenn dieser ein Teilungsverhältnis K von

$$K = \frac{W1}{W2} \cdot \frac{C_{par}}{C2} \text{ hat.}$$

Die parasitäre Kapazität $C_{par}$ des Transformators TR ist jedoch großen Fertigungsstreuungen unterworfen, so daß sich mit einer fest eingestellten Hilfsspannungsquelle $Q_{Hi}$ nur teilweise kompensieren läßt.

Besser ist dagegen die in Fig. 2 dargestellte erste Ausführungsvariante einer Schaltung mit einer aktiven Regelung. Dabei wird über einem Meßkondensator C2a die Störspannung $U_{stör}$ zwischen Nulleiter N und Masse (0 V) gemessen, einem invertierenden Verstärker zugeführt, und mittels einem Kompensationskondensator C2b kompensiert. Der invertierende Verstärker ist gebildet durch einen Transistor T2, einen Basisvorwiderstand R2 und einen Kollektorwiderstand R3. Die Schaltung mit aktiver Regelung bewirkt eine gute Kompensation der Störspannung; die beiden Kondensatoren C2a und C2b müssen allerdings jeweils als Y1-Kondensator ausgeführt sein.

Optional kann zur Kompensation sehr hoher Frequenzanteile ein zusätzlicher Kondensator C4 zwischen den Ausgang $A_{TR}$ des Transformators TR und den Ausgang $A_V$ des Verstärkers (T2, R2, R3) geschaltet werden, wie in Fig. 2 dargestellt, und sollte wie folgt dimensioniert werden:

$$C4 \approx \frac{W1}{W2} C_{par},$$

wobei angenommen wird, daß C4 wesentlich kleiner als C2b ist.

Eine Schaltung gemäß Fig. 2 wurde mit folgenden Werten der Bauelemente ausgeführt und getestet:

C2a = 2,2 nF

C2b = 2,2 nF

R2 = 56 kΩ

R3 = 1 kΩ

T2 = BC 817

C4 = 33 pF

Das Wicklungsverhältnis war W1/W2 ≈ 30, die parasitäre Kapazität Cpar ≈ 1 pF. Damit konnte die Funkstörspannung $U_{Stör}$ beim untersuchten Schaltnetzteil um mehr als 20 dB gegenüber der Standardrealisierung nach Fig. 4 reduziert werden.

Um einen der für die erste Ausführungsvariante nach Fig. 2 notwendigen Y1-Kondensatoren zu vermeiden, kann eine in Fig. 3 dargestellte zweite Schaltungsvariante verwendet werden. Bei dieser Schaltung ist die Hilfsspannungsquelle $Q_{Hi}$ durch den in Fig. 3 mit gestrichelter Linie umrandeten Schaltungsteil gebildet. Es besteht also eine Reihenschaltung des als Y1-Kondensator ausgeführten Funkentstörkondensators C2 mit der Hilfsspannungsquelle $Q_{Hi}$, die mit dem Ausgang +U verbunden ist. Der Spannungsabfall über dem Funkentstörkondensator C2 wird mit Hilfe eines Standard-Kondensators gleicher Kapazität, nämlich einem Referenzkondensator C5 der Hilfsspannungsquelle $Q_{Hi}$ nachgebildet.

Die Hilfsspannungsquelle $Q_{Hi}$ enthält außerdem einen Emitterfolger T5 und einen durch Transistoren T3 und T4 und zugehörige Emitterwiderstände R4, bzw. R5 gebildeten Schaltungsteil, der als Stromspiegel bekannt ist. Widerstände R6, R7 und R8 sowie Dioden D3, D4 sind zur Arbeitspunkt- bzw. Ruhestromeinstellung angeordnet. Außerdem sind HF-Block-Kondensatoren C6 und C7 vorhanden.

Bei dieser Anordnung wird der durch den Funkentstörkondensator C2 fließende Strom über die Transistoren T3 und T4 in den Referenzkondensator C5 gespiegelt. Bedingt durch Kapazitäts-Toleranzen kann mit dieser zweiten Schaltungsvariante (Fig.3) die Störpegeldämpfung der ersten Variante (Fig .2) nicht ganz erreicht werden; sie ist jedoch deutlich besser als ein passiver Spannungsteiler und kostengünstiger realisierbar als die erste Schaltungsvariante.

Ein Erprobungsmuster gemäß Fig. 3 wurde wie folgt dimensioniert:

C2 = 2,2 nF (Y1)

C5 = 2,2 nF (NP0)

C6, C7 = 100 nF

R7 = 330 Ω

R6, R8 = 1 kΩ

R4, R5 = 100 Ω

T2 = BC 817

T3, T4 = BC 807

D3, D4 = 1N4148

Die Komponenten R7, D3 und D4 dienen der Arbeitspunkteinstellung und sind für das HF-Signal wirkungslos.

**Patentansprüche**

1.  Schaltnetzteil mit einem Transformator (TR) zur Kopplung eines Primärteils mit einem Sekundärteil, wobei der Primärteil dafür eingerichtet ist, eine hochfrequente Spannung zu erzeugen, und der Sekundärteil dafür eingerichtet ist, eine Ausgangs-Gleichspannung zu erzeugen, und wobei eine Einrichtung zur Kompensation einer hochfrequenten Störspannung ($U_{stör}$) vorhanden ist, die aufgrund einer zwischen Wicklungen (W1, W2) des Transformators (TR) bestehenden parasitären Kapazität ($C_{par}$) im Schaltnetzteilbetrieb übertragen wird, **dadurch gekennzeichnet, daß**

    a) eine Reihenschaltung eines Funkentstörkondensators (C2) und einer Hilfsspannungsquelle ($Q_{Hi}$) angeordnet ist, wobei die Hilfsspannungsquelle ($Q_{Hi}$) dafür eingerichtet ist, eine Kompensationsspannung ($U_{comp}$) zur Kompensation der Störspannung ($U_{stör}$) zu bilden, und

    b) diese Reihenschaltung (C2, $Q_{Hi}$) als Verbindung eines Leiters (N) des Primärteils mit einem Leiter (0 V oder +U) des Sekundärteils angeordnet ist.

2.  Schaltnetzteil nach Anspruch 1, **dadurch gekenn-**

**zeichnet, daß** die Hilfsspannungsquelle ($Q_{Hi}$) durch einen invertierenden Verstärker (T2, R2, R3) gebildet ist, dem die mittels einem Meßkondensator (C2a) erfaßte Störspannung ($U_{stör}$) zugeführt ist, und als Funkentstörkondensator ($C_2$) ein Kompensationskondensator (C2b) zwischen den Leiter (N) des Primärteils und den Ausgang ($A_v$) des Verstärkers (T2, R2, R3) geschaltet ist.

3.  Schaltnetzteil nach Anspruch 2, **dadurch gekennzeichnet, daß** zur Kompensation sehr hoher Frequenzanteile ein zusätzlicher Kondensator (C4) zwischen den Ausgang ($A_{TR}$) des Transformators (TR) und den Ausgang ($A_v$) des Verstärkers (T2, R2, R3) geschaltet ist.

4.  Schaltnetzteil nach Anspruch 1, **dadurch gekennzeichnet, daß** die Hilfsspannungsquelle ($Q_{Hi}$) durch eine Kompensationsspannungsquelle (K) gebildet ist, die einen Referenzkondensator (C5) und einen Stromspiegel (T3, T4) enthält, womit der Strom durch den Funkentstörkondensator (C2) über den Stromspiegel (T3, T4) in den Referenzkondensator (C5) gespiegelt wird.

**Fig. 1**

**Fig. 2**

**Fig. 3**

Fig. 4